# EUROPEAN PATENT APPLICATION

(11) **EP 0 730 098 A1**
(43) Date of publication of application: **04.09.1996**
(21) Application number: 96301388.3
(22) Date of filing: 29.02.1996
(51) Int. Cl.: F16B 7/14

(54) **Improvements in clamping means**

(30) Priority: 03.03.1995 GB 9504291
(71) Applicant: Bartingale, Peter, Margate, Kent CT9 3DX (GB)
(72) Inventor: Bartingale, Peter, Margate, Kent CT9 3DX (GB)
(74) Representative: Prentice, Raymond Roy

(57) **Abstract**

A system for clamping a tube, rod, post or the like in a socket comprises an outer collar (1) adapted to be received in the socket and an inner collar (6) adapted to receive the tube, rod, post or the like. The inner collar (6) is adapted to be received within the outer collar (1) and is provided with a series of cam surfaces (7) on its outer surface which are arranged to engage and co-operate with a corresponding number of cam surfaces (5) on the inner surface of the outer collar. Rotation of one of the collars with respect to the other collar is effective to cause the cam surfaces to force the outer collar radially outwards to engage the wall of the socket and the inner collar radially inwards to engage the tube, rod, post or the like. In this manner, a secure clamping of the tube, rod, post or the like in the socket is achieved.

## Description

This invention relates to clamping means and is particularly concerned with a system for clamping a tube, rod, post or the like in a socket. The invention also extends to means for adjustable clamping between two tubular members.

A problem associated with conventional methods of adjustable clamping between tubes and rods, which can loosely be described as collet systems, is that they rely on one part of the collet system being fixed to an outer of two tubes or the like which is then used to clamp the other or inner tube or the like. It is time-consuming and expensive to secure one part of the collet system to a tube before said tube can be clamped to another tube.

Another problem with conventional collet systems is that they only allow for taking up tolerance variations on one of the tubes being clamped. The fit to the other tube is not adjustable.

The present invention seeks to avoid the need to fix the clamping means to one of the tubes to be clamped and to provide a clamping system which enables tolerances between both tubes to be taken up.

The invention further seeks to provide a system for clamping a tube, rod, post or the like in a socket in an adjustable and replaceable manner.

According to the invention, there is provided a system for clamping a tube, rod, post or the like in a socket, said system comprising at least one outer member adapted to be received in the socket and a second inner member adapted to receive the tube, rod, post or the like; characterized in that the inner member is adapted to fit within the outer member(s) and in that at least one of said members is provided with means for engaging the other member in such a manner that when relative rotation takes place between said members, the outer member is expanded to engage the socket and the inner member is contracted to engage the tube, rod, post or the like.

Preferably, the inner and outer members are provided with inter-engaging means which cause relative expansion and contraction of said members when they are rotated relative to one another.

According to one embodiment of the invention, the outer and inner members comprise concentrically-arranged collars. The inner surface of the outer collar is desirably provided with a plurality of cam surfaces and the outer surface of the inner collar is desirably provided with a corresponding number of cam surfaces adapted to co-operate with corresponding cam surfaces on the outer collar.

The outer collar may further be provided with a through-going slot extending throughout its length to permit expansion of the collar and with a radially outwardly extending flange which is too large to be received in the socket.

According to another embodiment of the invention, the outer member comprises a plurality of segments arranged to concentrically surround the inner member which takes the form of an inner collar. Each segment is desirably provided with an inner cam surface and the outer surface of the inner collar is desirably provided with a corresponding number of cam surfaces adapted to co-operate with and to engage a cam surface on a respective one of the segments.

In either embodiment, the inner collar may be provided with a through-going slot extending throughout its length to permit contraction of the collar and with a radially outwardly extending flange which is too large to be received within the outer collar or within the segments.

The invention will now be further described by way of example, with reference to the drawings in which:-
Fig. 1 is an exploded perspective view of one embodiment of a clamping system according to the invention showing two clamping collars for clamping round tubes;
Fig. 2 is a perspective view of the two clamping collars illustrated in Fig. 1 but shown assembled together;
Fig. 3 is a vertical sectional view taken on the vertical centre line of the collars shown in Fig. 2 but also showing inner and outer tubes to be clamped;
Fig. 4 is a section taken on the line X-X in Fig. 3 but showing the collars in the unclamped position;
Fig. 5 is a section corresponding to Fig. 4 but showing collars in the clamped position;
Fig. 6 is an exploded perspective view of a second embodiment of a clamping system according to the invention;
Fig. 7 is a perspective view corresponding to Fig. 6 but showing the clamping system in an assembled position;
Fig. 8 is a transverse cross-section through the clamping system shown in Fig. 7 and showing the clamping members of the system in the unclamped position; and
Fig. 9 is a section corresponding to Fig. 8 but showing the clamping members in the clamped position.
In the drawings, like parts are denoted by like reference numerals.

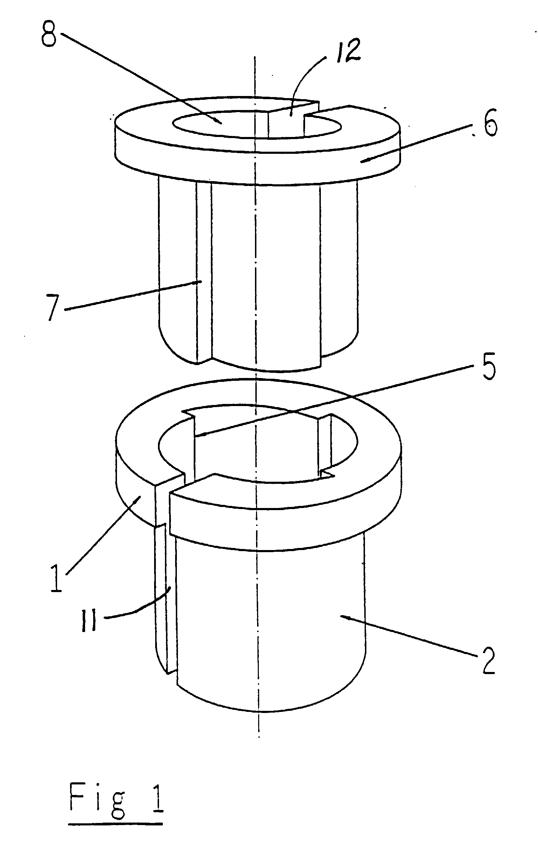

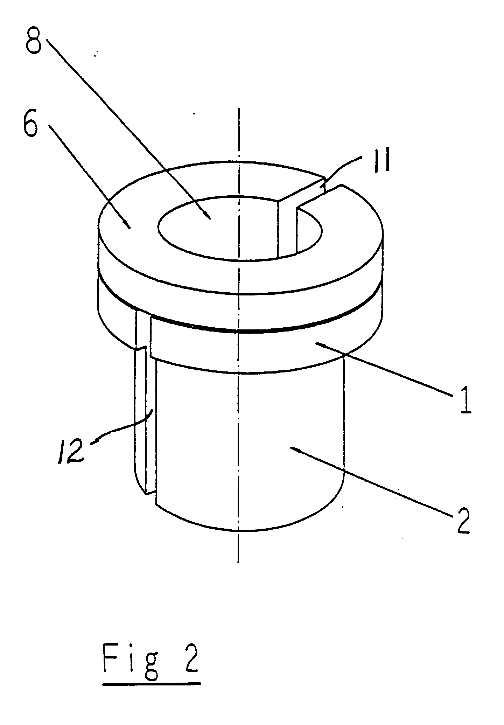

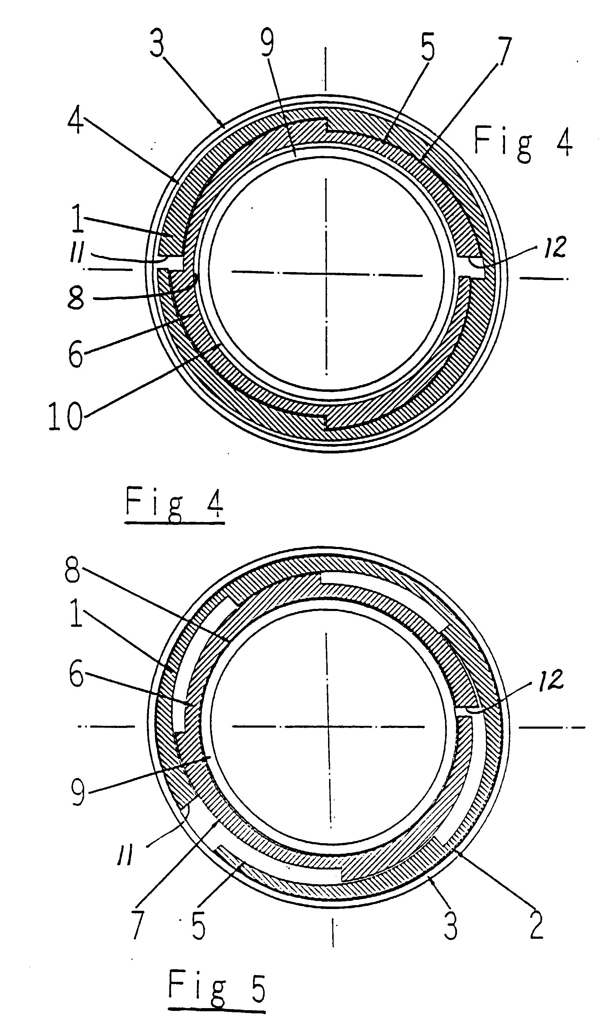

Reference will first be made to the embodiment shown in Figs. 1 to 5 of the drawings in which a clamping system according to the invention comprises an external collar 1 and an internal collar 6. The external collar 1 has a shank portion 2 which is adapted to fit into an outer tube or socket 3 with a clearance 4 as shown in Fig. 4 of the drawings. The collar is provided on its inner face with at least one toothed cam form 5. Four such cam forms are shown in the drawings but any suitable number may be provided.

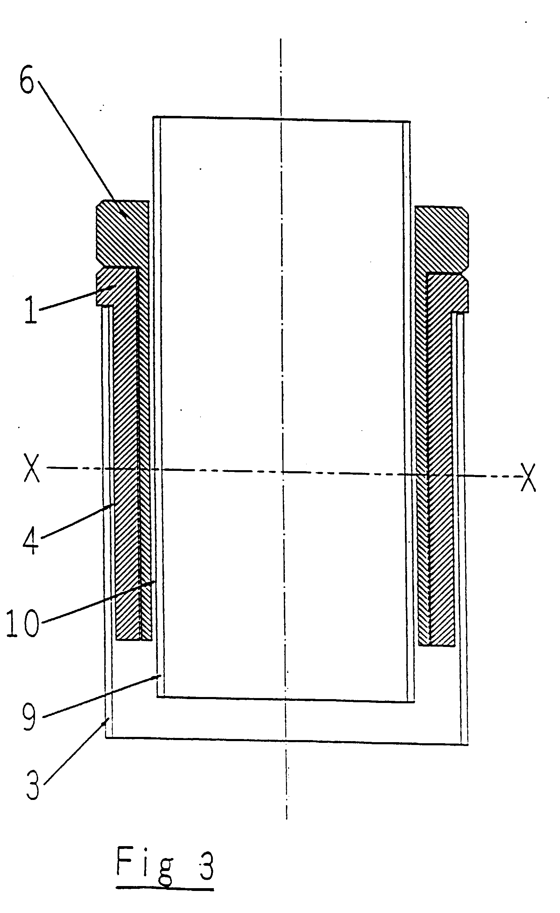

The internal collar 6 is provided, on its outer face, with a number of toothed cam forms 7, corresponding in number to the number of toothed cam forms 5, which are adapted to co-operate with the cam forms 5 in a manner to be hereinafter described. As shown in Figs. 3 and 4, the internal collar 6 can fit inside the external collar 1 and has a smooth inner face 8 which is adapted to fit over an inner tube 9 with a clearance 10.

The maximum height of the toothed cam forms 5 and 7 is greater than the combined width of the two clearance gaps 4 and 10.

As will be seen from the drawings, the external collar 1 has a slot 11 extending throughout its length so that it is not a complete tube. Similarly, the internal collar 6 has a similar slot 12 extending throughout its length. Clamping between the tubes 3 and 9 is achieved by relative rotation between the external and internal collars 1 and 6 whereby the engaging toothed cam forms 5 and 7 force the external collar 1 into engagement with the outer tube 3, closing the clearance gap 4, and the inner face 8 of the internal collar 6 into engagement with the inner tube 9 closing the clearance gap 10. In addition to permitting respective expansion and contraction of the collars 1 and 6, the slots 11 and 12 facilitate the insertion of suitable tools to enable the relative rotation between the collars 1 and 6 to be achieved and thereby obtain effective clamping between the tubes 3 and 9.

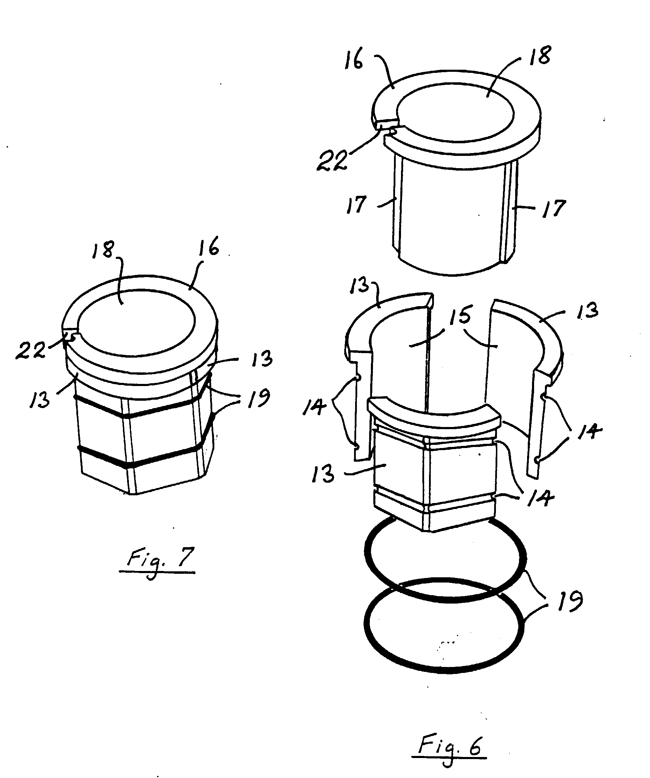

Turning now to Figs. 6 to 9 of the drawings, this embodiment of the invention differs from the embodiment shown in Figs. 1 to 5 in that the single external collar 1 is replaced by three segments 13 each of which is provided with a pair of grooves 14. The grooves are adapted to receive rings 19 of resilient material which hold the segments together around an internal collar 16. The inner surface 15 of each segment 13 takes the form of a curved cam surface.

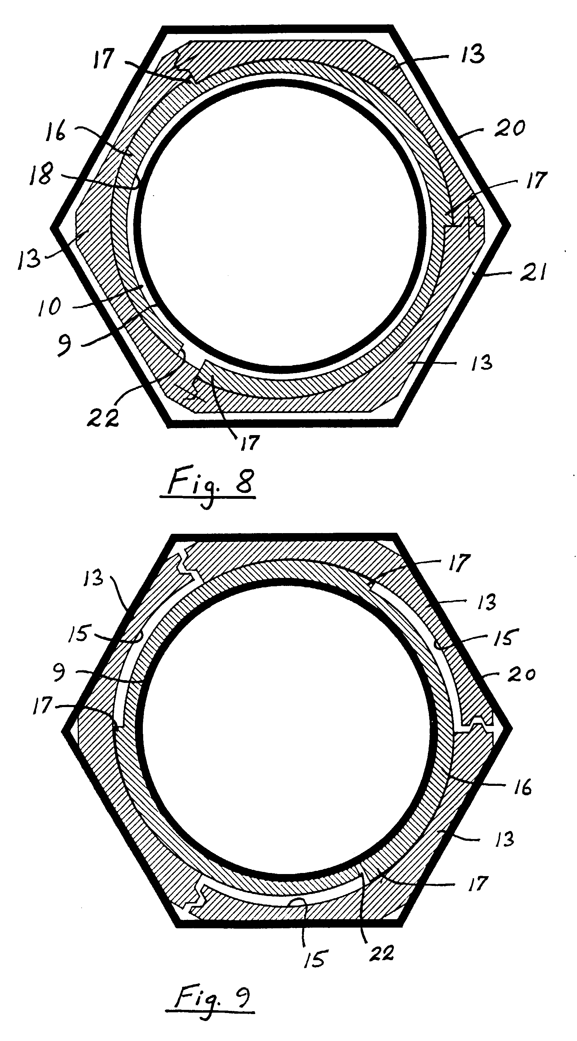

The internal collar 16 is similar to the internal collar 6 shown in Figs. 1 to 5 of the drawings but in this case is provided on its outer surface with three toothed cam forms 17 each of which is arranged to engage with a respective cam surface 15 of one of the segments 13. The inner surface 18 of the collar is smooth and is adapted to fit over an inner tube 9 with a clearance gap 10 as shown in Fig. 8 of the drawings.

As further shown in Fig. 8, the inner tube 9 has a substantially circular cross-section but the segments 13 are so shaped as to be received and fit into an outer tube or socket 20 of hexagonal cross-section. Initially, in the unclamped position, there is a clearance gap 21 between the segments 13 and the inner surfaces of the outer tube 20 as shown in Fig. 8 but if the internal collar 16 is rotated with respect to the segments 13, the segments are forced radially outwards to close the gap 21 and engage the inner surfaces of the tube 20 by virtue of the engagement of the cam surfaces 15 by the cam forms 17 on the internal collar 16. At the same time, the inner surface 18 of the collar 16 is forced radially inwardly to grip the inner tube 9, a slot 22 extending throughout the length of the collar 16 permitting this movement to take place. The slot 22 also facilitates the insertion of a suitable tool to enable the internal collar 16 to be rotated with respect to the segments 13 and thereby achieve effective clamping between the inner tube 9 and outer tube 20.

One end of each segment 13 is desirably so configured as to mate with the other end of an adjacent segment as shown in Fig. 8 of the drawings.

The internal and external collars and/or segments may be made of any suitable material but metal or plastics are preferred. Further, the rings 19 may take the form of springs or bands of resilient material such as "O" rings, the only requirement being that they are able to stretch when the segments 13 are expanded by the cam forms 17 to engage the inner surfaces of the outer tube 20.

It will be seen that the clamping systems according to the invention solve the problem of having to fix a clamping system to one of the tubes to be clamped. The clamping systems according to the invention also solve the problem of being able to accommodate large tolerance variations in the tubes being clamped.

It should be noted that the invention is not restricted to the above-described embodiments but variations and modifications may be made without departing from the scope of the invention. For example, although the embodiment illustrated in Figs. 1 to 5 of the drawings shows tubes of substantially circular cross-section being clamped and the embodiment illustrated in Figs. 6-9 of the drawings shows a tube of substantially circular cross-section being clamped to a tube of substantially hexagonal cross-section, tubes of other cross-sections may be clamped by means of a clamping system according to the invention, suitable modifications being made to the shape and configuration of the collars and clamping members in order to achieve this. Further, more or less than three segments maybe provided in the embodiment shown in Figs. 6 to 9 of the drawings and the number of toothed cam forms may also be varied. It is also possible to provide means other than toothed cam forms to achieve expansion and contraction of the clamping members in order to clamp the outer and inner tubes respectively.

## Claims

1. A system for clamping a tube, rod, post or the like (9, 19) in a socket (3, 20), said system comprising at least one outer member (1, 13) adapted to be received in the socket and a second inner member (6, 16) adapted to receive the tube, rod, post or the like; characterized in that the inner member (6, 16) is adapted to fit within the outer member(s) (1, 13) and in that at least one of said members is provided with means (5, 7; 15, 17) for engaging the other member in such a manner that when relative rotation takes place between said members, the outer member is expanded to engage the socket (3, 20) and the inner member is contracted to engage the tube, rod, post or the like (9, 19).

2. A clamping system according to claim 1, characterized in that the inner and outer members (1, 6; 13, 16) are provided with inter-engaging means (5, 7; 15, 17) which cause relative expansion and contraction of said members when they are rotated relative to one another.

3. A clamping system according to claim 1 or claim 2, characterized in that the outer and inner members comprise concentrically-arranged collars (1, 6).

4. A clamping system according to claim 3, characterized in that the inner surface of the outer collar (1) is provided with a plurality of cam surfaces (5) and in that the outer surface of the inner collar (6) is provided with a corresponding number of cam surfaces (7) adapted to co-operate with corresponding cam surfaces (5) on the outer collar (1).

5. A clamping system according to claim 3 or claim 4, characterized in the outer collar (1) is provided with a through-going slot (11) extending throughout its length to permit expansion of the collar.

6. A clamping system according to any one of claims 3 to 5, characterized in that the outer collar (1) is provided at one end with a radially outwardly extending flange which is too large to be received in the socket (3).

7. A clamping system according to claim 1 or claim 2, characterized in that the outer member comprises a plurality of segments (13) arranged to concentrically surround the inner member which takes the form of an inner collar (16).

8. A clamping system according to claim 7, characterized in that each segment (13) is provided with an inner cam surface (15) and in that the outer surface of the inner collar (16) is provided with a corresponding number of cam surfaces (17) adapted to co-operate with and to engage a cam surface (15) on a respective one of the segments (13).

9. A clamping system according to any one of claims 3 to 8, characterized in that the inner collar (6, 16) is provided with a through-going slot (12, 22) extending throughout its length to permit contraction of the collar.

10. A clamping system according to any one of claims 3 to 9, characterized in that the inner collar (6, 16) is provided at one end with a radially outwardly extending flange which is too large to be received within the outer collar (1) or within the segments (13).
